# EUROPEAN PATENT APPLICATION

(11) **EP 4 274 171 A1**
(43) Date of publication of application: **08.11.2023**
(21) Application number: 21921821.1
(22) Date of filing: 28.01.2021
(51) Int. Cl.: H04L 12/28

(54) **METHOD AND APPARATUS FOR AVOIDING LOOP**

(71) Applicant: Huawei Technologies Co., Ltd., Shenzhen, Guangdong 518129 (CN)
(72) Inventor: ZHU, Qianghua, Shenzhen, Guangdong 518129 (CN); LI, Hancheng, Shenzhen, Guangdong 518129 (CN)
(74) Representative: Pfenning, Meinig & Partner mbB
(86) International application number: PCT/CN2021/074247
(87) International publication number: WO 2022/160211

(57) **Abstract**

A loop avoidance method and an apparatus are disclosed, and relate to the field of communication technologies, to avoid a loop on a network in a scenario in which a 5G LAN interworks with an existing LAN. The method includes: An application function network element receives a first message, where the first message includes a first container, and the first container indicates port information of a first terminal device; the application function network element obtains spanning tree information related to the first terminal device based on the first message; and the application function network element sends a third container to the first terminal device, where the third container includes the spanning tree information related to the first terminal device. For example, the spanning tree information related to the first terminal device may indicate a port role and a port status of a port of the first terminal device.

## Description

### TECHNICAL FIELD

This application relates to the field of communication technologies, and in particular, to a loop avoidance method and an apparatus.

### BACKGROUND

A 5G local area network (5G local area network, 5G LAN) service is a service provided by a current 5G network, and is mainly used for home communication, enterprise office, factory manufacturing, internet of vehicles, power grid reconstruction, a public security organization, and the like. The 5G LAN service can provide private communication of an internet protocol (internet protocol, IP) type or a non-IP type (such as an Ethernet type) for two or more terminal devices in a group of terminal devices. For example, based on the 5G LAN service, devices in a factory form a group, and different devices may send Ethernet data packets to each other. Alternatively, office devices (such as mobile phones, computers, or laptop computers) of employees in a department of an enterprise form a group, and different office devices may send IP data packets to each other. The 5G LAN service may forward broadcast data for group members. For example, a broadcast packet sent by a terminal device is forwarded to another terminal device in the group.

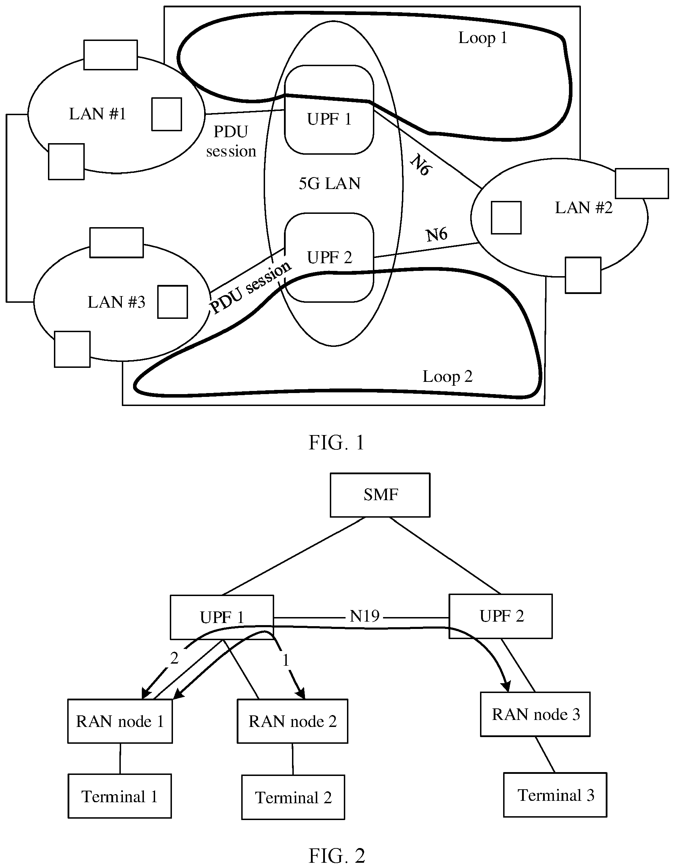

When a 5G LAN interworks with an existing local area network (local area network, LAN), a protocol data unit (protocol data unit, PDU) session from a terminal device to a user plane network element may be considered as a link between switches. Therefore, a redundant link may exist on a network formed by the 5G LAN and the existing LAN, and forms a loop. For example, as shown in FIG. 1, the 5G LAN includes a UPF 1 and a UPF 2, the UPF 1 connects to a LAN #1 and a LAN #2, and the UPF 2 connects to the LAN #2 and a LAN #3. It can be learned that there are a plurality of loops in the network, for example, a loop 1 existing between the UPF 1, the LAN #1, and the LAN #2, and a loop 2 existing between the UPF 2, the LAN #2, and the LAN #3.

The broadcast packet may proliferate and circulate infinitely due to a loop on the network. This affects network communication. Therefore, in a scenario in which the 5G LAN interworks with the existing LAN, how to avoid a loop is an urgent technical problem to be resolved.

### SUMMARY

This application provides a loop avoidance method and an apparatus, to avoid a loop on a network formed by a 5G LAN and an existing LAN, in a scenario in which the 5G LAN interworks with the existing LAN.

According to a first aspect, a loop avoidance method is provided, including: An application function network element receives a first message, where the first message includes a first container, and the first container indicates port information of a first terminal device; the application function network element obtains spanning tree information related to the first terminal device based on the first message; and the application function network element sends a third container to the first terminal device, where the third container includes the spanning tree information related to the first terminal device.

According to the technical solutions provided in embodiments of this application, the first terminal device can obtain the spanning tree information related to the first terminal device without performing an STP election process, and then the first terminal device performs corresponding configuration based on the spanning tree information related to the first terminal device, thereby avoiding a loop on a network.

In a possible design, the spanning tree information related to the first terminal device indicates a port role and a port status of a port of the first terminal device. Based on this design, the first terminal device may determine whether the port is a root port, a designated port, or a non-designated port, and set a proper port status (for example, a forwarding state or a blocking state) for the port, to avoid the loop on the network.

In a possible design, the spanning tree information related to the first terminal device further includes a bridge identifier of a LAN bridge on which the first terminal device is located. Based on this design, the first terminal device may obtain the bridge identifier of the LAN bridge on which the first terminal device is located, and further determine the LAN bridge on which the first terminal device is located.

In a possible design, the spanning tree information related to the first terminal device further includes a root bridge identifier. In this way, on one hand, the first terminal device may determine, based on the bridge identifier and the root bridge identifier of the LAN bridge on which the first terminal device is located, a bridge role (that is, a root bridge or a non-root bridge) of the LAN bridge on which the first terminal device is located. On the other hand, the first terminal device may determine the root bridge in the network based on the root bridge identifier, to perform an STP maintenance process.

In a possible design, the LAN bridge includes the first terminal device and a first user plane network element connected to the first terminal device. Based on this design, the first terminal device and the first user plane network element participate in an STP election process as a whole. In this way, in a process of interworking between a 5G LAN and an existing LAN, a quantity of LAN bridges (or switches) in the network can be reduced, and a network topology can be simplified. In addition, access/exit of a terminal device affects only a port status on a switch. Therefore, in an access and/or exit process of a large quantity of terminal devices, topology management can be simplified, and a spanning tree can converge quickly.

In a possible design, the LAN bridge further includes a second terminal device connected to the first user plane network element.

In a possible design, the second terminal device and the first terminal device belong to a same group.

In a possible design, the third container further includes first indication information, and the first indication information indicates the first terminal device to activate an STP function.

In a possible design, the first container further includes first STP capability information and/or first STP version information. The first STP capability information indicates whether the first terminal device supports the STP function. The first STP version information indicates an STP version supported by the first terminal device.

In a possible design, the first message further includes a second container, and the second container indicates port information of the first user plane network element connected to the first terminal device. In this way, the application function network element may obtain or update topology information of the 5G LAN based on the port information of the first user plane network element.

In a possible design, the second container further includes second STP capability information and/or second STP version information. The second STP capability information indicates whether the first user plane network element supports the STP function. The second STP version information indicates an STP version supported by the first user plane network element.

In a possible design, the method further includes: The application function network element obtains spanning tree information related to the first user plane network element based on the first message; and the application function network element sends a fourth container to the first user plane network element, where the fourth container includes the spanning tree information related to the first user plane network element. Based on this design, the first user plane network element can obtain the spanning tree information related to the first user plane network element without performing the STP election process, and then the first user plane network element performs corresponding configuration based on the spanning tree information related to the first user plane network element, thereby avoiding the loop on the network.

In a possible design, the spanning tree information related to the first user plane network element indicates a port role and a port status of a port of the first user plane network element. Based on this design, the first user plane network element may determine whether the port is a root port, a designated port, or a non-designated port, and set a proper port status for the port, to avoid the loop on the network.

In a possible design, the spanning tree information related to the first user plane network element further includes a bridge identifier of a LAN bridge on which the first user plane network element is located. Based on this design, the first user plane network element may obtain the bridge identifier of the LAN bridge on which the first user plane network element is located, and further determine the LAN bridge on which the first user plane network element is located.

In a possible design, the spanning tree information related to the first user plane network element further includes a root bridge identifier. In this way, on one hand, the first user plane network element may determine, based on the bridge identifier and the root bridge identifier of the LAN bridge on which the first terminal device is located, a bridge role (that is, a root bridge or a non-root bridge) of the LAN bridge on which the first terminal device is located. On the other hand, the first terminal device may determine the root bridge in the network based on the root bridge identifier, to perform an STP maintenance process.

In a possible design, the fourth container further includes second indication information, and the second indication information indicates the first user plane network element to activate an STP function.

In a possible design, the first message further includes an identifier of the group to which the first terminal device belongs.

In a possible design, before that the application function network element obtains spanning tree information related to the first terminal device based on the first message, the method further includes: The application function network element obtains policy information associated with the group to which the first terminal device belongs; and when the policy information is used to support activation of the STP function, the application function network element determines to activate the STP function for the group to which the first terminal device belongs.

In a possible design, before that the application function network element obtains spanning tree information related to the first terminal device based on the first message, the method further includes: The application function network element obtains a 5G LAN user plane topology associated with the group to which the first terminal device belongs; and when the 5G LAN user plane topology meets a preset condition, the application function network element determines to activate the STP function for the group to which the first terminal device belongs.

In a possible design, that the 5G LAN user plane topology meets the preset condition includes one or more of the following: There are a plurality of ports used to connect to a data network in the 5G LAN user plane topology; or there are a plurality of user plane network elements in the 5G LAN user plane topology. It should be understood that if the 5G LAN user plane topology meets the preset condition, it indicates that there is a relatively high probability that a loop occurs in a network formed by the 5G LAN and the existing LAN connected to the 5G LAN.

According to a second aspect, a loop avoidance method is provided, including: A first terminal device sends a first container to an application function network element, where the first container indicates port information of the first terminal device; and the first terminal device receives a third container sent by the application function network element, where the third container includes spanning tree information of the first terminal device.

According to the technical solutions provided in embodiments of this application, the first terminal device can obtain the spanning tree information related to the first terminal device without performing an STP election process, and then the first terminal device performs corresponding configuration based on the spanning tree information related to the first terminal device, thereby avoiding a loop on a network.

In a possible design, the spanning tree information related to the first terminal device indicates a port role and a port status of a port of the first terminal device.

In a possible design, the spanning tree information related to the first terminal device further includes a bridge identifier of a LAN bridge on which the first terminal device is located.

In a possible design, the spanning tree information related to the first terminal device further includes a root bridge identifier.

In a possible design, the LAN bridge includes the first terminal device and a first user plane network element connected to the first terminal device.

In a possible design, the LAN bridge further includes a second terminal device connected to the first user plane network element.

In a possible design, the second terminal device and the first terminal device belong to a same group.

In a possible design, the third container further includes first indication information, and the first indication information indicates the first terminal device to activate an STP function.

In a possible design, the first container further includes first STP capability information and/or first STP version information. The first STP capability information indicates whether the first terminal device supports the STP function. The first STP version information indicates an STP version supported by the first terminal device.

According to a third aspect, a loop avoidance method is provided, including: A first user plane network element sends a second container to an application function network element, where the second container indicates port information of the first user plane network element; and the first user plane network element receives a fourth container sent by the application function network element, where the fourth container includes spanning tree information related to the first user plane network element.

According to the technical solutions provided in embodiments of this application, the first user plane network element can obtain the spanning tree information related to the first user plane network element without performing the STP election process, and then the first user plane network element performs corresponding configuration based on the spanning tree information related to the first user plane network element, thereby avoiding the loop on the network.

In a possible design, the spanning tree information related to the first user plane network element indicates a port role and a port status of a port of the first user plane network element.

In a possible design, the spanning tree information related to the first user plane network element further includes a bridge identifier of a LAN bridge on which the first user plane network element is located.

In a possible design, the spanning tree information related to the first user plane network element further includes a root bridge identifier.

In a possible design, the LAN bridge includes the first user plane network element and a first terminal device connected to the first user plane network element.

In a possible design, the fourth container further includes second indication information, and the second indication information indicates the first user plane network element to activate an STP function.

In a possible design, the second container further includes second STP capability information and/or second STP version information. The second STP capability information indicates whether the first user plane network element supports the STP function. The second STP version information indicates an STP version supported by the first user plane network element.

According to a fourth aspect, a communication apparatus is provided, including a processing module and a communication module. The communication module is configured to receive a first message, where the first message includes a first container, and the first container indicates port information of a first terminal device. The processing module is configured to obtain spanning tree information related to the first terminal device based on the first message. The communication module is further configured to send a third container to the first terminal device, where the third container includes the spanning tree information related to the first terminal device.

In a possible design, the spanning tree information related to the first terminal device indicates a port role and a port status of a port of the first terminal device.

In a possible design, the spanning tree information related to the first terminal device further includes a bridge identifier of a LAN bridge on which the first terminal device is located.

In a possible design, the spanning tree information related to the first terminal device further includes a root bridge identifier.

In a possible design, the LAN bridge includes the first terminal device and a first user plane network element connected to the first terminal device.

In a possible design, the LAN bridge further includes a second terminal device connected to the first user plane network element.

In a possible design, the second terminal device and the first terminal device belong to a same group.

In a possible design, the third container further includes first indication information, and the first indication information indicates the first terminal device to activate an STP function.

In a possible design, the first container further includes first STP capability information and/or first STP version information. The first STP capability information indicates whether the first terminal device supports the STP function. The first STP version information indicates an STP version supported by the first terminal device.

In a possible design, the first message further includes a second container, and the second container indicates port information of the first user plane network element connected to the first terminal device.

In a possible design, the second container further includes second STP capability information and/or second STP version information. The second STP capability information indicates whether the first user plane network element supports the STP function. The second STP version information indicates an STP version supported by the first user plane network element.

In a possible design, the processing module is further configured to obtain spanning tree information related to the first user plane network element based on the first message. The communication module is further configured to send a fourth container to the first user plane network element, where the fourth container includes the spanning tree information related to the first user plane network element.

In a possible design, the spanning tree information related to the first user plane network element indicates a port role and a port status of a port of the first user plane network element.

In a possible design, the spanning tree information related to the first user plane network element further includes a bridge identifier of a LAN bridge on which the first user plane network element is located.

In a possible design, the spanning tree information related to the first user plane network element further includes a root bridge identifier.

In a possible design, the fourth container further includes second indication information, and the second indication information indicates the first user plane network element to activate an STP function.

In a possible design, the first message further includes an identifier of the group to which the first terminal device belongs.

In a possible design, the communication module is further configured to obtain policy information associated with the group to which the first terminal device belongs. The processing module is further configured to: when the policy information is used to support activation of the STP function, determine to activate the STP function for the group to which the first terminal device belongs.

In a possible design, the communication module is further configured to obtain a 5G LAN user plane topology associated with the group to which the first terminal device belongs. The processing module is further configured to: when the 5G LAN user plane topology meets a preset condition, determine to activate the STP function for the group to which the first terminal device belongs.

In a possible design, that the 5G LAN user plane topology meets the preset condition includes one or more of the following: There are a plurality of ports used to connect to a data network in the 5G LAN user plane topology; or there are a plurality of user plane network elements in the 5G LAN user plane topology.

According to a fifth aspect, a communication apparatus is provided, including a processing module and a communication module. The processing module is configured to generate a first container, where the first container indicates port information of a first terminal device. The communication module is configured to send the first container to an application function network element, and receive a third container sent by the application function network element, where the third container includes spanning tree information of the first terminal device.

In a possible design, the spanning tree information related to the first terminal device indicates a port role and a port status of a port of the first terminal device.

In a possible design, the spanning tree information related to the first terminal device further includes a bridge identifier of a LAN bridge on which the first terminal device is located.

In a possible design, the spanning tree information related to the first terminal device further includes a root bridge identifier.

In a possible design, the LAN bridge includes the first terminal device and a first user plane network element connected to the first terminal device.

In a possible design, the LAN bridge further includes a second terminal device connected to the first user plane network element.

In a possible design, the second terminal device and the first terminal device belong to a same group.

In a possible design, the third container further includes first indication information, and the first indication information indicates the first terminal device to activate an STP function.

In a possible design, the first container further includes first STP capability information and/or first STP version information. The first STP capability information indicates whether the first terminal device supports the STP function. The first STP version information indicates an STP version supported by the first terminal device.

According to a sixth aspect, a communication apparatus is provided, including a processing module and a communication module. The processing module is configured to generate a second container, where the second container indicates port information of a first user plane network element. The communication module is configured to: send the second container to an application function network element; and receive a fourth container sent by the application function network element, where the fourth container includes spanning tree information related to the first user plane network element.

In a possible design, the spanning tree information related to the first user plane network element indicates a port role and a port status of a port of the first user plane network element.

In a possible design, the spanning tree information related to the first user plane network element further includes a bridge identifier of a LAN bridge on which the first user plane network element is located.

In a possible design, the spanning tree information related to the first user plane network element further includes a root bridge identifier.

In a possible design, the LAN bridge includes the first user plane network element and a first terminal device connected to the first user plane network element.

In a possible design, the fourth container further includes second indication information, and the second indication information indicates the first user plane network element to activate an STP function.

In a possible design, the second container further includes second STP capability information and/or second STP version information. The second STP capability information indicates whether the first user plane network element supports the STP function. The second STP version information indicates an STP version supported by the first user plane network element.

According to a seventh aspect, a communication apparatus is provided, including a processor and a communication interface. The processor is configured to execute computer program instructions, so that the communication apparatus implements the loop avoidance method in any design provided in any one of the first aspect to the third aspect.

According to an eighth aspect, a computer-readable storage medium is provided. The computer-readable storage medium stores instructions. When the instructions are run on a computer, the computer is enabled to implement the loop avoidance method in any design provided in any one of the first aspect to the third aspect.

According to a ninth aspect, a computer program product including computer instructions is provided. When the computer program product runs on a computer, the computer is enabled to implement the loop avoidance method in any design provided in any one of the first aspect to the third aspect.

According to a tenth aspect, a chip is provided. The chip includes a processor. When executing computer program instructions, the processor implements the loop avoidance method in any design provided in any one of the first aspect to the third aspect.

For technical effects brought by any design manner of the fourth aspect to the tenth aspect, refer to beneficial effects in the corresponding method provided above. Details are not described herein again.

### BRIEF DESCRIPTION OF DRAWINGS

FIG. 1 is a schematic diagram of a scenario in which a 5G LAN interworks with an existing LAN;
FIG. 2 is a schematic diagram of a system architecture of a 5G LAN;
FIG. 3 is a schematic diagram of an architecture of a 5G network according to an embodiment of this application;
FIG. 4(a) is a schematic diagram of a scenario in which a 5G LAN interworks with an existing LAN according to an embodiment of this application;
FIG. 4(b) is a schematic diagram of another scenario in which a 5G LAN interworks with an existing LAN according to an embodiment of this application;
FIG. 4(c) is a schematic diagram of still another scenario in which a 5G LAN interworks with an existing LAN according to an embodiment of this application;
FIG. 4(d) is a schematic diagram of yet another scenario in which a 5G LAN interworks with an existing LAN according to an embodiment of this application;
FIG. 4(e) is a schematic diagram of still yet another scenario in which a 5G LAN interworks with an existing LAN according to an embodiment of this application;
FIG. 5 is a flowchart of a loop avoidance method according to an embodiment of this application;
FIG. 6 is a flowchart of another loop avoidance method according to an embodiment of this application;
FIG. 7 is a flowchart of still another loop avoidance method according to an embodiment of this application;
FIG. 8 is a flowchart of yet another loop avoidance method according to an embodiment of this application;
FIG. 9 is a schematic diagram of still yet another scenario in which a 5G LAN interworks with an existing LAN according to an embodiment of this application;
FIG. 10 is a schematic diagram of a structure of a communication apparatus according to an embodiment of this application; and
FIG. 11 is a schematic diagram of a structure of another communication apparatus according to an embodiment of this application.

### DESCRIPTION OF EMBODIMENTS

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that in this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, the word such as "example" or "for example" is intended to present a related concept in a specific manner.

To facilitate understanding of the technical solutions in this application, the following first briefly describes technical terms in this application.

### 1. PDU session

A 5G core network supports a PDU connection service. The PDU connection service is a service of exchanging PDU data packets between a terminal device and a data network (data network, DN). The PDU connection service is implemented by initiating establishment of a PDU session by the terminal device. The terminal device establishes the PDU session, that is, establishes a data transmission channel between the terminal device and the DN.

It should be noted that the terminal device may initiate establishment of one or more PDU sessions, to connect to a same DN or different DNs. The terminal device may be served by a group of core network elements (such as a session management function (session management function, SMF) network element, a policy control function (policy control function, PCF) network element, and a user plane function (user plane function, UPF) network element). These core network elements coordinate and manage PDU session resources of the terminal device.

### 2. N4 session

An N4 session is created by an SMF on a UPF, to manage a function of a UPF that provides a service for a PDU session. For example, when a terminal device establishes a PDU session, the SMF may indicate the UPF to establish the N4 session corresponding to the PDU session. When the SMF receives a request for deleting the PDU session, the SMF triggers the UPF to delete the N4 session corresponding to the PDU session. In some cases, the SMF may further trigger the UPF to modify the N4 session corresponding to the PDU session.

In embodiments of this application, N4 sessions may be classified into user-level (or terminal device-level) N4 sessions and group-level N4 sessions.

In an establishment process of an N4 session, both the SMF and the UPF generate an N4 session context to store parameters related to the N4 session. The N4 session context may include an N4 session ID, and N4 routing rules used for the N4 session, including a packet detection rule (packet detection rule, PDR), a forwarding action rule (forwarding action rule, FAR), a quality of service (quality of services, QoS) enforcement rule (QoS enforcement rule, QER), and a usage reporting rule (usage reporting rule, URR).

The UPF implements detecting and forwarding of a PDU session packet based on the parameters in the N4 session context such as the PDR, the FAR, the QER, and the URR.

For example, after the UPF receives a packet from an ingress, the UPF determines, by using the PDR, the N4 session to which the packet belongs. Then, the UPF performs matching between a PDR (which may be one or more PDRs) in the N4 session context and characteristic information of the packet, to find a PDR that matches the packet. The PDR associates or specifies a FAR, a QER, and a URR that correspond to the packet. Therefore, the UPF may perform the following operation on the packet according to the FAR: dropping (drop), forwarding (forward), buffering (buffer), notifying (notify) a control plane, or duplicating (duplicate). The UPF may perform a QoS enforcement on the packet according to the QER. The UPF may perform usage reporting on the packet according to the URR.

### 3. Spanning tree protocol (spanning tree protocol, STP)

The STP works at the data link layer and is used to generate a loop-free logical topology on the Ethernet. The STP can prevent a loop caused by a redundant link of a switch. If there are two or more links to the root bridge in any switch, the STP implements path redundancy through algorithms and trims a loop network into a loop-free tree network. In this way, only one active link exists between any two switches, preventing packets from increasing and infinite cycling in the loop network.

A root node needs to exist in a tree network structure. In the STP, the root node is referred to as a root bridge. The root bridge is a logical center of an entire network, but not necessarily a physical center of the network. Devices other than the root bridge on the network are referred to as non-root bridges. It should be understood that when the network topology changes, the root bridge may also change.

Two basic metrics of the STP algorithm are an identifier (identity, ID) and path costs (path cost).

The ID is classified into a bridge identifier (bridge Identity, BID) and a port identifier (port ID, PID).

The BID includes a bridge priority (bridge priority) and a bridge MAC address. For example, the BID occupies eight bytes. Among the eight bytes occupied by the BID, first two bytes are used to carry the bridge priority, and last six bytes are used to carry the bridge MAC address. On the STP network, a device with a smallest BID is elected as the root bridge.

The PID includes a port priority (port priority) and a port number. The PID is used as a basis for selecting a designated port of the device in some cases.

The path costs are a port variable and are a reference value used by the STP to select a link. The STP calculates the path costs, selects a robust link, blocks a redundant link, and trims the network into the loop-free tree topology. On the STP network, root path costs (root path cost, RPC) of a port is a sum of path costs of ports on all bridges along the path from the port to the root bridge.

The STP changes a ring network topology to a tree network topology based on the following factors: root bridge, root port (root port, RP), and designated port (designated port, DP).

The root bridge is a device with a smallest BID on the network.

The root port refers to the port that is of the device and that is closest to the root bridge. The port forwards data to the root bridge. A device running the STP has only one root port. It should be understood that there is no root port on the root bridge. The root port is selected based on the root path costs (root path cost, RPC). Among all STP-enabled ports on a device, a port with smallest root path costs is the root port.

For a switching device, its designated port is a port that forwards a BPDU packet to a downstream switching device. All ports of the root bridge are designated ports. A designated port is elected on each network segment of the ring network. The switching device that has a designated port on a network segment is referred to as a designated bridge of the network segment.

Optionally, the STP further has a port role: an alternate port (alternate port, AP). The alternate port provides an alternate path to the root bridge for the device. In this way, when the root port is faulty, the device can use the alternate port to communicate with the root bridge.

For example, as shown in Table 1, the STP includes the following port statuses.

**Table 1**

| Port status | Purpose | Description |
|---|---|---|
| Forwarding | A port forwards user traffic and | Only a root port or a designated port |
| (forwarding) | processes a BPDU packet. | can enter a forwarding state. |
| Learning (learning) | A device creates a MAC address table based on received user traffic but does not forward the user traffic. | A transition state, where the learning state is added to prevent temporary loops (generally, the learning state is set to 15s). |
| Listening (listening) | Determine a port role and elect a root bridge, a root port, and a designated port. | Transition state (generally set to 15s) |
| Blocking (blocking) | A port receives and processes a BPDU packet, but does not forward user traffic. | |
| Disable (disable) | A port neither processes a BPDU packet nor forwards user traffic. | |

Currently, devices on a network exchange BPDU packets to determine a root bridge, a root port, and a designated port through election. The BPDU packet mainly includes the following fields: a root identifier (root identity) field, a root path cost field, a bridge identifier (bridge identity) field, and a port identifier field. For a BPDU packet, the root identifier field is set to a BID of a root bridge considered by a switch that sends the BPDU packet. The root path cost field is set to a shortest path cost from a port of the switch that sends the BPDU packet to the root bridge. The bridge identifier field is set to the BID of the switch that sends the BPDU packet. The port identification field is set to a PID of the port of the switch that sends the BPDU packet.

It should be understood that the BPDU packet is generally sent at a specified time interval.

The STP involves an election process and a maintenance process.
(1) The election process includes the following steps.
   S 1: When an Ethernet LAN is initialized, all switches consider themselves as root bridges and send BPDU packets. It should be understood that, in a BPDU packet sent by each port of a device, a root identifier field is set to a BID of the device, a bridge identifier field is set to a BID of the device, and a port identifier field is set to a PID of a port that sends the BPDU packet.
   S2: The device on a network exchanges BPDU packets, compares BIDs of devices, and selects a device with a smallest BID as a root bridge.
   S3: After the root bridge is elected, the root bridge sends, at a default advertisement interval of 2 seconds, a BPDU packet in which the root bridge is the root bridge. Other switches select a root port based on the received BPDU packet, replace the bridge ID in the BPDU packet with a bridge ID of the switch, and forward the BPDU packet to other connected switches through a designated port of the switch. Other ports of the device that are not designated ports or root ports are blocked (blocking).
(2) The maintenance process includes the following steps.

After the network completes election, the root bridge continues to periodically send the BPDU packet to ensure network stability. The blocked ports on the device continuously listen to the BPDU packet sent by a peer end. If no BPDU packet is received within a specified period, the blocked interface considers that the network has changed and triggers network convergence calculation again.

The foregoing describes the terms used in embodiments of this application, and details are not described below again.

For a 5G LAN service, the 3rd generation partnership project (3rd generation partnership project, 3GPP) proposes to support one-to-one and one-to-many communication in the 5G LAN. Specifically, to support one-to-one and one-to-many communication of the 5G LAN, a 3GPP network is required to support group-based unicast, multicast, and broadcast, support duplication and distribution of multicast and broadcast packets, and support any terminal device as a multicast source.

To meet this requirement, the current 3GPP technical standard (technical specification, TS) 23.501 defines that one 5G LAN is managed by one SMF. As shown in FIG. 2, the SMF manages one or more UPFs. FIG. 2 is drawn by using an example in which the SMF manages a UPF 1 and a UPF 2. The UPF 1 and the UPF 2 maintain routing rules. The UPF 1 and the UPF 2 may perform packet forwarding according to the routing rules maintained by the UPF 1 and the UPF 2. It is assumed that a terminal device 1, a terminal device 2, and a terminal device 3 belong to a same group. When two terminal devices (for example, the terminal 1 and the terminal 2 in FIG. 2) served by a same UPF perform one-to-one communication with each other, data transmission is performed by the UPF through local switching (local switch). When two terminal devices (for example, the terminal 1 and the terminal 3 in FIG. 2) served by different UPFs perform one-to-one communication with each other, data transmission is performed through a tunnel between the UPF 1 and the UPF 2.

In embodiments of this application, two UPFs may exchange tunnel information through the SMF, to establish the tunnel. A tunnel (or a forwarding path) between UPFs may be constructed by using a virtual local area network (virtual LAN, VLAN), a virtual extensible local area network (virtual extensible LAN, VxLAN), a general packet radio service (general packet radio service, GPRS) tunneling protocol-user plane (GPRS tunneling protocol-user plane, GTP-U), a generic routing encapsulation (generic routing encapsulation, GRE) protocol, or an IP tunnel. The foregoing construction may be dynamic, or may be pre-configured in a network. This is not specifically limited in embodiments of this application.

Different construction manners correspond to different tunnel information. For example, when the VLAN is used for construction, the tunnel information may be a UPF ID, a UPF ID+a virtual local area network identifier (VLAN ID, VID), or media access control (media access control, MAC)+a VID. Alternatively, for example, when the VxLAN is used for construction, the tunnel information may be a UPF ID, a UPF ID+a VID, an IP address+a VID, or an IP address+a port (port) number+a VID. Alternatively, for example, when the GTP-U is used for construction, the tunnel information may be a UPF ID, a UPF ID+a tunnel endpoint identifier (tunnel endpoint identifier, TEID), an IP address+a TEID, or an IP address+a port+a TEID. Alternatively, for example, when the GRE is used for construction, the tunnel information may be a UPF ID, a UPF ID+a key (key), an IP address+a key, or an IP address+a port+a key. Alternatively, when the IP tunnel is used for construction, the tunnel information may be a UPF ID, an IP address, or an IP address+a port. If the tunnel information includes the UPF ID, the UPF ID may be a MAC address or an IP address, or an IP address+a port. Alternatively, an SMF network element or the UPF network element may determine, based on the UPF ID, a corresponding MAC address or IP address, or an IP address+a port. General descriptions are provided herein. Details are not described below again.

In this embodiment of this application, one 5G LAN may provide a group communication service for one group. In other words, one 5G LAN may correspond to one group. One SMF or UPF may alternatively provide a communication service for a plurality of groups.

Optionally, in terms of expression, the 5G LAN may also be referred to as a 5G virtual network (5G virtual network, 5G VN), 5G VN group, 5G LAN-VN group, a LAN-type service (type service), a LAN-VN, a 5G LAN-type service (type service), or the like. A name of the 5G LAN is not specifically limited in this embodiment of this application.

In the architecture shown in FIG. 2, the SMF is mainly responsible for all control plane functions of terminal device session management, including UPF selection and control, IP address allocation and management, session quality of service (quality of service, QoS) management, a function of obtaining a policy and charging control (policy and charging control, PCC) policy from a PCF, and the like.

In the architecture shown in FIG. 2, the UPF serves as an anchor point of a PDU session connection, and is responsible for data packet filtering of the terminal device, data transmission/forwarding, rate control, charging information generation, user plane QoS processing, uplink transmission authentication, transmission class verification, downlink data packet buffering, downlink data notification triggering, and the like.

In the architecture shown in FIG. 2, a radio access network (radio access network, RAN) is an RAN node, and the RAN node may also be referred to as an access network device. For example, the RAN node may be a transmission reception point (transmission reception point, TRP), a base station, or a control node in various forms (for example, a network controller or a radio controller (for example, a radio controller in a cloud radio access network (cloud radio access network, CRAN) scenario)). Specifically, the RAN node may be a macro base station, a micro base station (also referred to as a small cell), a relay station, an access point (access point, AP), or the like in various forms, or may be an antenna panel of a base station. The control node may be connected to a plurality of base stations, and configure resources for a plurality of terminal devices that fall within coverage of the plurality of base stations. In systems that use different radio access technologies, names of devices having functions of the base station may vary. For example, the device may be referred to as an evolved NodeB (evolved NodeB, eNB or eNodeB) in a long term evolution (long term evolution, LTE) system, or may be referred to as a next generation NodeB (next generation node base station, gNB) in a 5G system or an NR system. A specific name of the base station is not limited in this application. The RAN node may alternatively be a network device in a future evolved public land mobile network (public land mobile network, PLMN) or the like.

In the architecture shown in FIG. 2, the terminal device is an entity for receiving a signal and/or sending a signal on a user side. The terminal device is configured to provide one or more of a voice service and a data connectivity service for a user. The terminal device may also be referred to as user equipment (user equipment, UE), a terminal, an access terminal device, a subscriber unit, a subscriber station, a mobile station, a remote station, a remote terminal device, a mobile device, a user terminal device, a wireless communication device, a user agent, or a user apparatus. The terminal device may be a vehicle to everything (vehicle to everything, V2X) device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a device-to-device (device-to-device, D2D) device, for example, an electricity meter or a water meter. Alternatively, the terminal device may be a mobile station (mobile station, MS), a subscriber unit (subscriber unit), an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal device, a handheld device having a wireless communication function, a computing device or another processing device connected to a wireless modem, a vehicle-mounted device, or a wearable device (which may also be referred to as a wearable intelligent device). Alternatively, the terminal device may be a terminal device in a next-generation communication system, for example, a terminal device in a 5G system, a future evolved PLMN, or a terminal device in an NPN.

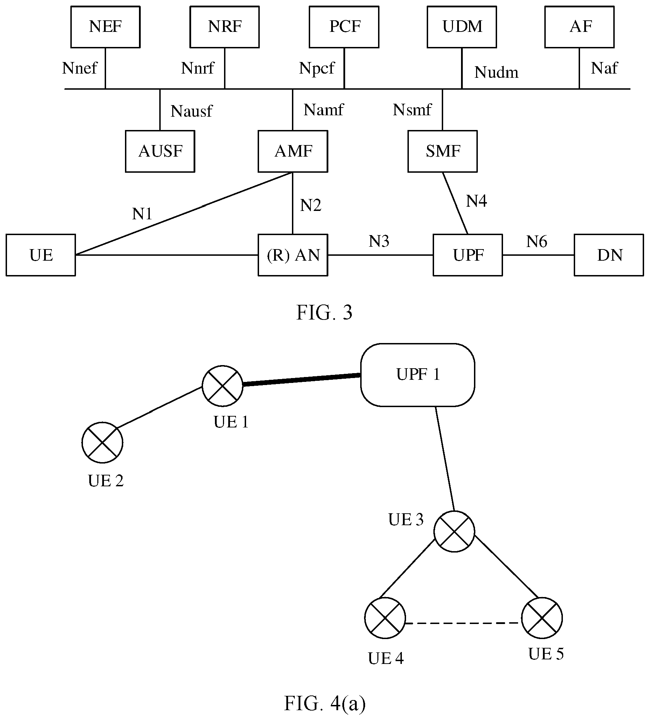

Optionally, as shown in FIG. 3, a current 5G network may further include the following network elements: an access and mobility management function (core access and mobility management function, AMF) network element, an authentication server function (authentication server function, AUSF) network element, a network slice selection function (network slice selection function, NSSF) network element, a network exposure function (network exposure function, NEF) network element, a network repository function (network exposure function Repository Function, NRF) network element, a policy control function (policy control function, PCF) network element, a unified data management (unified data management, UDM) network element, an application function (application function, AF) network element, and the like. This is not specifically limited in embodiments of this application.

The terminal device communicates with the AMF network element via a next generation (next generation, N) network 1 interface (N1 for short). An RAN device communicates with the AMF network element via an N2 interface (N2 for short). The RAN device communicates with a UPF network element via an N3 interface (N3 for short). The UPF network element communicates with a DN via an N6 interface (N6 for short).

Control plane network elements, for example, the AMF network element, the SMF network element, the UDM network element, the AUSF network element, and the PCF network element, may alternatively interact with each other via a service-based interface. For example, as shown in FIG. 3, a service-based interface exhibited by the AMF may be Namf, a service-based interface exhibited by the SMF network element may be Nsmf, a service-based interface exhibited by the UDM network element may be Nudm, a service-based interface exhibited by the PCF network element may be Npcf, and a service-based interface exhibited by the AUSF network element may be Nausf. Details are not described herein. The name of the service-based interface is merely an example, and is not specifically limited.

Currently, the terminal device accesses a 5G LAN service by establishing a PDU session, so that the 5G LAN can communicate with an existing LAN. For example, as shown in FIG. 4(a), UE 1 and UE 2 form a local LAN. After the UE 1 initiates a PDU session establishment procedure, a PDU session is established between the UE 1 and a UPF 1. In this way, the UPF 1 in the 5G LAN may connect to a LAN including the UE 1 and the UE 2, and a LAN including UE 3, UE 4, and UE 5.

However, in some cases, interworking between the 5G LAN and the existing LAN may cause a loop. The following describes several possible cases by using examples.

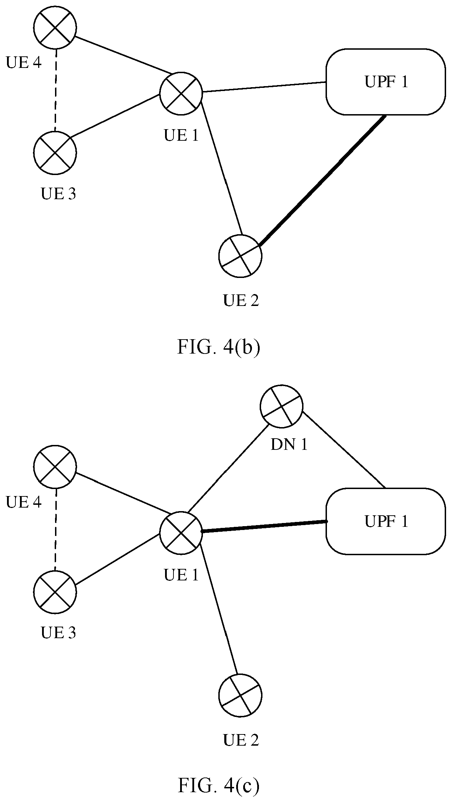

FIG. 4(b) is used as an example. A PDU session has been established between the UE 1 and the UPF 1, and the UE 1 is further connected to the UE 2. In this case, after the UE 2 initiates the PDU session establishment procedure, the PDU session is established between the UE 2 and the UPF 1. Therefore, communication links between the LTE 2, the LTE 1, and the UPF form a loop.

FIG. 4(c) is used as an example. There is a communication link between the UE 1 and a DN 1, and there is a communication link between the UPF 1 and the DN 1. In this case, after the UE 1 initiates the PDU session establishment procedure, the PDU session is established between the UE 1 and the UPF 1. Therefore, a communication link between the UE 1, the UPF 1, and the DN 1 forms a loop.

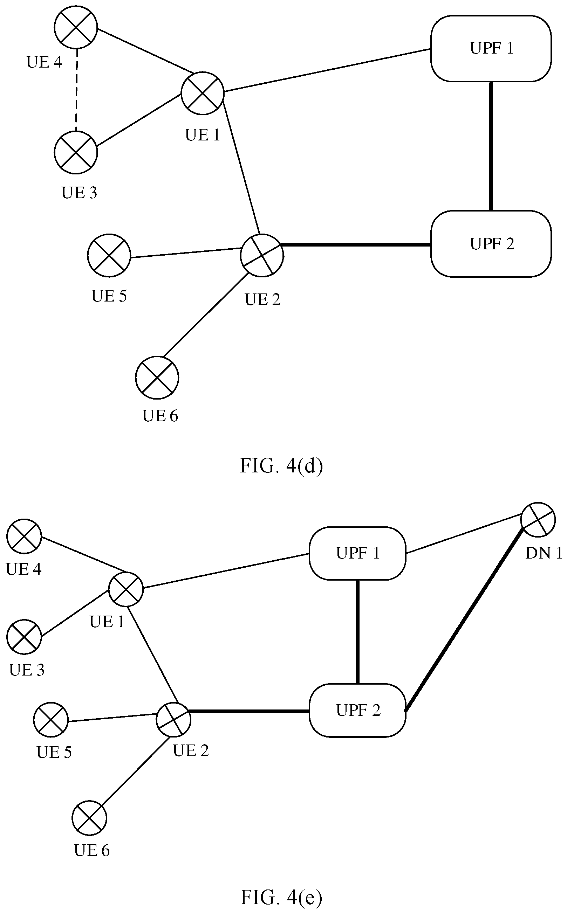

FIG. 4(d) is used as an example. A PDU session has been established between the UE 1 and the UPF 1, and the UE 1 is further connected to the UE 2. After the UE 2 initiates a PDU session establishment procedure, a PDU session is established between the UE 2 and the UPF 2, and an N19 tunnel is established between the UPF 2 and the UPF 1. Therefore, communication links between the LTE 1, the UE 2, the UPF 1, and the UPF 2 form a loop.

FIG. 4(e) is used as an example. A PDU session has been established between the UE 1 and the UPF 1, the LTE 1 is further connected to the LTE 2, and the UPF 1 is further connected to the DN 1. After the LTE 2 initiates a PDU session establishment procedure, a PDU session is established between the UE 2 and the UPF 2, an N19 tunnel is established between the UPF 2 and the UPF 1, and the UPF 2 is connected to the DN 1. Therefore, communication links between the LTE 1, the LTE 2, the DN 1, the UPF 1, and the UPF 2 form a loop.

When a loop exists on a network, broadcast packets proliferate and circulate infinitely, affecting network communication. Therefore, in a scenario in which the 5G LAN interworks with the existing LAN, how to avoid a loop is an urgent technical problem to be resolved.

To resolve the technical problem, an embodiment of this application provides a loop avoidance method. A main idea of the method is as follows: When a first terminal device establishes a PDU session to access a 5G LAN, an application function network element may send spanning tree information related to the first terminal device to the first terminal device, so that the first terminal device can perform corresponding configuration based on the spanning tree information related to the first terminal device. Optionally, the application function network element may further send spanning tree information related to a first user plane network element to the first user plane network element connected to the first terminal device, so that the first user plane network element performs corresponding configuration based on the spanning tree information related to the first user plane network element.

In this way, even if a user plane (for example, the first terminal device and the first user plane network element) of the 5G LAN does not perform an STP election procedure, a network formed by the 5G LAN and the connected existing LAN may be trimmed into a loop-free tree network, thereby avoiding occurrence of a loop.

Optionally, the spanning tree information related to the first terminal device and the spanning tree information related to the first user plane network element may be obtained through analysis by the application function network element. For example, the application function network element may simulate, based on topology information of the network including the 5G LAN and the existing LAN, an STP election process, to obtain the spanning tree information of the network including the 5G LAN and the existing LAN. Further, the application function network element may obtain, from the spanning tree information of the network including the 5G LAN and the existing LAN, the spanning tree information related to the first terminal device and the spanning tree information related to the first user plane network element.

Optionally, in an analysis process, the application function network element may use any one of the following processing manners for the first terminal device and the first user plane network element.

Processing manner 1: The application function network element considers the first terminal device as a LAN bridge, and considers the first user plane network element as another LAN bridge to participate in a simulated STP election process.

Based on the processing manner 1, a PDU session between the first terminal device and the first user plane network element may be considered as a first port of the first terminal device on the first terminal device. A PDU session between the first terminal device and the first user plane network element may be considered as a second port of the first user plane network element on the first user plane network element.

In addition, based on the processing manner 1, a tunnel between the first user plane network element and another user plane network element in the 5G LAN may be considered as a third port of the first user plane network element on the first user plane network element.

Processing manner 2: The application function network element considers the first user plane network element as a LAN bridge, and considers the first terminal device as a part of the LAN bridge.

For ease of description, a LAN bridge including the first terminal device and the first user plane network element is referred to as a target LAN bridge below.

Based on the processing manner 2, the PDU session between the first terminal device and the first user plane network element is not considered as a port of the first terminal device. Likewise, the PDU session between the first terminal device and the first user plane network element is not considered as a port of the first terminal device.

Optionally, based on the processing manner 2, the target LAN bridge may further include a second terminal device connected to the first user plane network element. Optionally, the second terminal device and the first terminal device may belong to a same group.

Optionally, based on the processing manner 2, the target LAN bridge may further include another user plane network element (for example, a second user plane network element) in the 5G LAN. In this case, the tunnel between the first user plane network element and the second user plane network element is not considered as a port of the first user plane network element.

It should be understood that if the target LAN bridge does not include the second user plane network element in the 5G LAN, the tunnel between the first user plane network element and the second user plane network element in the 5G LAN may be considered as a third port of the first user plane network element on the first user plane network element.

The second user plane network element may be any one of user plane network elements other than the first user plane network element in the 5G LAN.

An advantage of the foregoing processing manner 2 is that in a process of interworking between the 5G LAN and the existing LAN, a quantity of LAN bridges in the network can be reduced, and a network topology can be simplified. In addition, access/exit of a terminal device affects only a port status on a LAN bridge. Therefore, in an access and/or exit process of a large quantity of terminal devices, topology management can be simplified, and a spanning tree can converge quickly.

Optionally, the LAN bridge is similar to a switch in the existing LAN.

The following specifically describes, with reference to the accompanying drawings in this specification, the technical solutions provided in this application for resolving the foregoing technical problem. It should be understood that names of the following messages, information, and parameters are merely examples, and do not constitute a specific limitation.

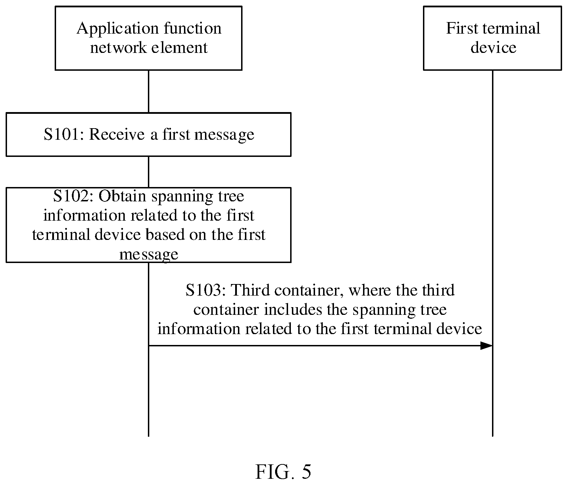

FIG. 5 shows a loop avoidance method according to an embodiment of this application. The method includes the following steps.

S101: An application function network element receives a first message.

The first message may include a first container. The first container includes port information of a first terminal device. The port information of the first terminal device may indicate a port identifier, a performance parameter, and/or a function configuration parameter of a port, and the like.

The function configuration parameter may be used to indicate a function supported by the port, for example, whether the port supports an LLDP or whether the port supports an STP.

The performance parameter is used to reflect performance of the port. For example, the performance parameter may include one or more of the following parameters: a bandwidth of the port or a propagation delay between the port and a neighboring node.

In a possible design, the port information of the first terminal device may directly include the port identifier, the performance parameter, and/or the function configuration parameter of the port, and the like.

In another possible design, the port information of the first terminal device may include a BPDU packet and/or an LLDP packet received by the port of the first terminal device. Therefore, the application function network element may determine the port identifier, the performance parameter, the function configuration parameter, and the like of the port based on the BPDU packet and/or the LLDP packet received by the port of the first terminal device. It should be understood that, that the port information includes the BPDU packet is equivalent to implicitly indicating that the port supports an STP function. Alternatively, that the port information includes the LLDP packet is equivalent to implicitly indicating that the port supports an LLDP function.

In addition, when the port information of the first terminal device includes the BPDU packet and/or the LLDP packet, the application function network element may further obtain, based on the BPDU packet and/or the LLDP packet, existing LAN information related to the first terminal device. The existing LAN information may be used to determine a topology of the existing LAN connected to the first terminal device.

Optionally, the first container may further include STP information related to the first terminal device. For example, the STP information related to the first terminal device may include first STP capability information and/or first STP version information. The first STP capability information may indicate whether the first terminal device supports the STP function. The first STP version information may indicate an STP version supported by the first terminal device. It should be understood that, in an actual application, the first STP capability information and the first STP version information may be two separate pieces of information, or may be integrated into one piece of information. This is not limited.

Optionally, to support the application function network element in using the processing manner 1, the first container may further include a bridge identifier of the first terminal device. Alternatively, the first container may further include a bridge priority and/or a bridge MAC address of the first terminal device, so that the application function network element determines the bridge identifier of the first terminal device.

Optionally, the first message may further include a second container. The second container includes port information of the first user plane network element connected to the first terminal device. The port information of the first user plane network element may be used to reflect a port identifier, a performance parameter, and/or a function configuration parameter of the port.

In a possible design, the port information of the first user plane network element may directly include the port identifier, the performance parameter, and/or the function configuration parameter of the port.

In another possible design, the port information of the first user plane network element may include a BPDU packet and/or an LLDP packet received by a port (for example, an N6 port) of the first user plane network element. Therefore, the application function network element may determine the port identifier, the performance parameter, the function configuration parameter, and the like of the port based on the BPDU packet and/or the LLDP packet received by the port of the first user plane network element. It should be understood that, that the port information includes the BPDU packet is equivalent to implicitly indicating that the port supports an STP function. Alternatively, that the port information includes the LLDP packet is equivalent to implicitly indicating that the port supports an LLDP function.

In addition, when the port information of the first user plane network element includes the BPDU packet and/or the LLDP packet, the application function network element may further obtain, based on the BPDU packet and/or the LLDP packet, existing LAN information related to the first user plane network element. The existing LAN information may be used to determine a topology of an existing LAN connected to the first user plane network element.

Optionally, the second container may further include STP information related to the first user plane network element. For example, the STP information related to the first user plane network element may include second STP capability information and/or second STP version information. The second STP capability information may indicate whether the first user plane network element supports an STP function. The second STP version information may indicate an STP version supported by the first user plane network element. It should be understood that, in an actual application, the second STP capability information and second STP version information may be two separate pieces of information, or may be integrated into one piece of information. This is not limited.

Optionally, to support the application function network element in using the processing manner 1, the second container may further include a bridge identifier of the first user plane network element. Alternatively, the second container may further include a bridge MAC address and/or a bridge priority of the first user plane network element, so that the application function network element determines the bridge identifier of the first user plane network element.

Optionally, to support the application function network element in using the processing manner 2, the second container may further include a bridge identifier of a target LAN bridge. Alternatively, the first message may further include the bridge identifier of the target LAN bridge.

It should be understood that the bridge identifier of the target LAN bridge included in the second container or the first message may be a candidate bridge identifier provided to the application function network element for reference, and is not necessarily a bridge identifier actually used by the target LAN bridge. To be specific, the application function network element may use the bridge identifier of the target LAN bridge included in the first message or the second container as the bridge identifier actually used by the target LAN bridge. Alternatively, the application function network element may allocate the bridge identifier actually used by the target LAN bridge.

Optionally, when the first message includes the first container and the second container, the application function network element may learn of a relationship between the first terminal device and the first user network element. In other words, the application function network element may learn that the first terminal device is connected to the first user plane network element.

Optionally, when the first message includes only the first container but does not include the second container, the first message may further include an identifier of the first user plane network element (for example, a device identifier, a bridge identifier of the first user plane network element, or a bridge identifier of a LAN bridge on which the first user plane network element is located), so that the application function network element can learn that the first terminal device is connected to the first user plane network element.

Optionally, the first message may further include an identifier of a group to which the first terminal device belongs.

In a possible implementation of the step S 101, the application function network element receives the first message from a session management network element. For example, the application function network element may receive the first message from the session management network element by using a policy control function network element or a network exposure function network element.

It should be understood that the session management network element may obtain the first container from the first terminal device, and encapsulate the first container into the first message. Further, the session management network element may further obtain a second container from the first user plane network element, and encapsulate the second container into the first message.

For example, the application function network element may be an AF in a 5G network, or a network element configured to be responsible for managing an application function in a future network. A user plane network element may be a UPF in the 5G network, or a network element that is configured to be responsible for managing the user plane network element in the future network. The session management network element may be an SMF in the 5G network, or a network element that is configured to manage a PDU session in the future network. This is not limited in embodiments of this application.

S102: The application function network element obtains spanning tree information related to the first terminal device based on the first message.

In a possible implementation, the application function network element may obtain or update, based on the first message, topology information of the 5G LAN associated with the group to which the first terminal device belongs. Then, the application function network element may simulate an STP election process based on the topology information of the 5G LAN and the topology information of the existing LAN connected to the 5G LAN, to derive spanning tree information related to the 5G LAN. Further, the application function network element may obtain, based on the spanning tree information related to the 5G LAN, the spanning tree information related to the first terminal device.

The topology information of the 5G LAN may be used to reflect a connection relationship between LAN bridges in the 5G LAN and configuration information of the LAN bridges. The configuration information of the LAN bridge may include a bridge identifier of the LAN bridge, a port identifier of each port of the LAN bridge, and a port bandwidth. It should be understood that, for the 5G LAN, one LAN bridge may include only one terminal device or one user plane network element. Alternatively, one LAN bridge may include at least one user plane network element and at least one terminal device.

It should be understood that, before the first terminal device, another terminal device in the group may first establish a PDU session to access a 5G LAN service, so that the application function network element may obtain, in a manner similar to the step S101, related information of the another terminal device (for example, port information of the another terminal device) and/or related information of a user plane network element connected to the another terminal device. The application function network element continuously updates the topology information of the 5G LAN based on the related information of the another terminal device in the group and/or the related information of the user plane network element to which the another terminal device is connected. Therefore, the application function network element can learn a latest topology state of the 5G LAN in a timely manner.

In addition, after the terminal device in the group releases the PDU session to disconnect from the 5G LAN, the session management network element also needs to indicate, to the application function network element, that the terminal device does not access the 5G LAN, so that the application function network element updates the topology information of the 5G LAN.

The topology information of the existing LAN may indicate a connection relationship between a switch in the existing LAN and the LAN bridge, and configuration information of the switch in the existing LAN.

It should be understood that an implementation in which the application function network element obtains the topology information of the existing LAN is not limited in this embodiment of this application. For example, the application function network element may be a software-defined networking (software of network, SDN) controller (controller), so that the application function network element locally stores the topology information of the existing LAN. Alternatively, the application function network element obtains the topology information of the existing LAN from the SDN controller.

The spanning tree information related to the 5G LAN may be used to determine a bridge role of each LAN bridge in the 5G LAN, and a port role and a port status of each port of each LAN bridge.

Optionally, in a simulated STP election process, the application function network element may first compare bridge identifiers of a plurality of LAN bridges and a switch in the existing LAN, to elect a LAN bridge (or a switch) with a smallest bridge identifier as a root bridge. Correspondingly, other LAN bridges except the root bridge and switches in the existing LAN are elected as non-root bridges. Then, the application function network element sets each port of the root bridge as a designated port. The application function network element further determines a port role and a port status of each port that serves as the non-root bridge. For running logic of the simulated STP election process, refer to the STP election process in the related technology. Details are not described herein again.

The spanning tree information related to the first terminal device is used to determine a LAN bridge where the first terminal device is located, and a port role and a port status of each port of the first terminal device in the LAN bridge.

In this embodiment of this application, that the spanning tree information related to the first terminal device is used to determine a port role and a port status of each port of the first terminal device in the LAN bridge may be specifically implemented as follows: The spanning tree information related to the first terminal device may include port configuration information of the first terminal device, and the port configuration information of the first terminal device includes the port identifier, the port role, and the port status of the port of the first terminal device.

In this embodiment of this application, that the spanning tree information related to the first terminal device is used to determine a LAN bridge on which the first terminal device is located may be specifically implemented as follows: The spanning tree information related to the first terminal device includes a bridge identifier of the LAN bridge on which the first terminal device is located.

Optionally, the spanning tree information related to the first terminal device is further used to determine the bridge role of a LAN bridge on which the first terminal device is located. The bridge role can be the root bridge or the non-root bridge.

In a possible design, the spanning tree information related to the first terminal device further includes a bridge role identifier, and the bridge role identifier indicates the bridge role of the LAN bridge on which the first terminal device is located.

In another possible design, the spanning tree information related to the first terminal device further includes a root bridge identifier. Therefore, the first terminal device can determine, based on the root bridge identifier and the bridge identifier of the LAN bridge on which the first terminal device is located, the LAN bridge on which the first terminal device is located. Specifically, if the root bridge identifier is the same as the bridge identifier of the LAN bridge on which the first terminal device is located, it indicates that the LAN bridge on which the first terminal device is located is the root bridge. Alternatively, if the root bridge identifier is different from the bridge identifier of the LAN bridge on which the first terminal device is located, it indicates that the LAN bridge on which the first terminal device is located is the non-root bridge.

S103: The application function network element sends a third container to the first terminal device. Correspondingly, the first terminal device receives the third container sent by the application function network element.

The third container may include the spanning tree information related to the first terminal device.

Optionally, the third container may further include first indication information. The first indication information indicates the first terminal device to activate an STP function. Optionally, the first indication information may further indicate an STP version used by the first terminal device.

For example, the STP version may include but is not limited to: a rapid spanning tree protocol (rapid spanning tree protocol, RSTP) and/or a multiple spanning tree protocol (multiple spanning tree protocol, MSTP). Unified descriptions are provided herein and details are not described below again.

In a possible implementation, the application function network element sends the third container to the first terminal device by using the policy control function network element and the session management network element. Specifically, a transmission path of the third container may be: the application function network element -> the policy control function network element -> the session management network element -> the first terminal device.

It should be understood that in this embodiment of this application, "->" is used to indicate an information transfer direction. For example, device 1 -> device 2 indicates that information is sent from a device 1 to a device 2.

In another possible implementation, the application function network element sends the third container to the first terminal device by using the network exposure function network element, the policy control function network element, and the session management network element. Specifically, a transmission path of the third container may be: the application function network element -> the network exposure function network element -> the policy control function network element -> the session management network element -> the first terminal device.

It should be understood that, after receiving the third container, the first terminal device may configure, based on the third container, the bridge identifier of the LAN bridge on which the first terminal device is located, and the port role and the port status of each port of the first terminal device, to avoid a loop on the network. Optionally, the first terminal device may further configure the root bridge identifier based on the third container.

Based on the embodiment shown in FIG. 5, the application function network element obtains the spanning tree information related to the first terminal device based on the first message. Then, the application function network element sends the third container to the first terminal device, so that the first terminal device learns of the spanning tree information related to the first terminal device. Therefore, the first terminal device may configure each port of the first terminal device based on the spanning tree information related to the first terminal device, thereby avoiding a loop on the network.

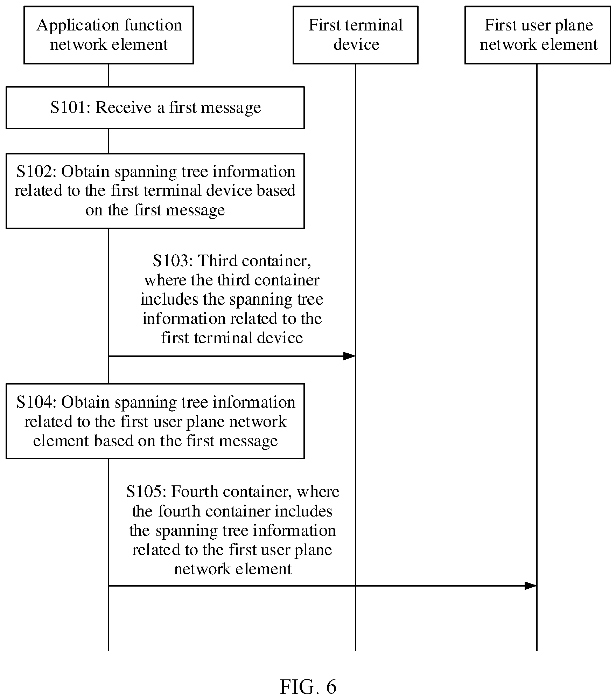

Optionally, based on the embodiment shown in FIG. 5, as shown in FIG. 6, after the step S101, the loop avoidance method may further include steps S104 and S105.

S104: The application function network element obtains spanning tree information related to the first user plane network element based on the first message.

In a possible implementation, the application function network element obtains the spanning tree information related to the 5G LAN based on the first message. Then, the application function network element obtains, from the spanning tree information related to the 5G LAN, the spanning tree information related to the first user plane network element. For a specific implementation of obtaining the spanning tree information related to the 5G LAN, refer to the specific description in the step S103. Details are not described herein again.

Optionally, when the first message includes the second container, the application function network element may obtain related information (for example, the port information and the bridge identifier of a LAN bridge on which the first user plane network element is located) of the first user plane network element from the second container included in the first message. Alternatively, the application function network element may find the related information of the first user plane network element locally.

Optionally, the related information of the first user plane network element that is locally stored by the application function network element may be reported to the application function network element in a manner similar to the foregoing step S 101 when another terminal device in the group is connected to the first user plane network element before the first terminal device.

The spanning tree information related to the first user plane network element is used to determine a LAN bridge on which the first user plane network element is located, and the port role and the port status of each port of the first user plane network element in the LAN bridge.

In this embodiment of this application, the spanning tree information related to the first user plane network element may include port configuration information of the first user plane network element, and the port configuration information of the first user plane network element includes a port identifier, a port role, and a port status of a port of the first user plane network element.

In this embodiment of this application, that the spanning tree information related to the first user plane network element is used to determine the LAN bridge on which the first user plane network element is located may be specifically implemented as follows: The spanning tree information related to the first user plane network element includes a bridge identifier of a LAN bridge on which the first user plane network element is located.

Optionally, the spanning tree information related to the first user plane network element is further used to determine a bridge role of the LAN bridge on which the first user plane network element is located. The bridge role can be the root bridge or the non-root bridge.

In a possible design, the spanning tree information related to the first user plane network element further includes a bridge role identifier, and the bridge role identifier indicates a bridge role of the LAN bridge on which the first user plane network element is located.

In another possible design, the spanning tree information related to the first user plane network element further includes a root bridge identifier. Therefore, the first user plane network element can determine, based on the root bridge identifier and the bridge identifier of the LAN bridge on which the first user plane network element is located, the LAN bridge on which the first terminal device is located. Specifically, if the root bridge identifier is the same as the bridge identifier of the LAN bridge on which the first user plane network element is located, it indicates that the LAN bridge on which the first user plane network element is located is the root bridge. Alternatively, if the root bridge identifier is different from the bridge identifier of the LAN bridge on which the first user plane network element is located, it indicates that the LAN bridge on which the first user plane network element is located is the non-root bridge.

It should be understood that if the application function network element uses the processing manner 1, the LAN bridge on which the first terminal device is located and the LAN bridge on which the first user plane network element is located are not a same LAN bridge. Alternatively, if the application function network element uses the processing manner 2, the LAN bridge on which the first terminal device is located and the LAN bridge on which the first user plane network element is located are a same LAN bridge.

S105: The application function network element sends a fourth container to the first user plane network element. Correspondingly, the first user plane network element receives the fourth container sent by the application function network element.

The fourth container includes the spanning tree information related to the first user plane network element.

Optionally, the fourth container may further include second indication information. The second indication information indicates the first user plane network element to activate an STP function. Specifically, the second indication information may indicate the first user plane network element to activate an STP function for the group to which the first terminal device belongs.

Optionally, the second indication information may further indicate an STP version used by the first user plane network element.

In a possible implementation, the application function network element sends the fourth container to the first user plane network element by using the policy control function network element and the session management network element. Specifically, a transmission path of the fourth container is: the application function network element -> the policy control function network element -> the session management network element -> the first user plane network element.

In another possible implementation, the application function network element sends the fourth container to the first user plane network element by using the network exposure function network element, the policy control function network element, and the session management network element. Specifically, a transmission path of the fourth container may be: the application function network element -> the network exposure function network element -> the policy control function network element -> the session management network element -> the first user plane network element.

It should be understood that, after receiving the fourth container, the first user plane network element may configure, based on the fourth container, the bridge identifier of the LAN Bridge on which the first user plane network element is located, and the port role and the port status of each port of the first user plane network element, to avoid a loop on the network. Optionally, the first user plane network element may further configure the root bridge identifier based on the fourth container.

It should be understood that an execution sequence between the steps S102 and S103 and the steps S104 and S105 is not limited in this embodiment of this application. For example, the steps S102 and S103 may be first performed, and then the steps S104 and S 105 are performed; or the steps S104 and S 105 are first performed, and then the steps S102 and S 103 are performed; or the steps S102 and S103 and the steps S104 and S 105 are simultaneously performed.

Based on the embodiment shown in FIG. 6, the application function network element obtains the spanning tree information related to the first user plane network element based on the first message. Then, the application function network element sends the fourth container to the first user plane network element, so that the first user plane network element learns of the spanning tree information related to the first user plane network element. Therefore, the first user plane network element may configure each port of the first user plane network element based on the spanning tree information related to the first user plane network element, to avoid a loop on the network.

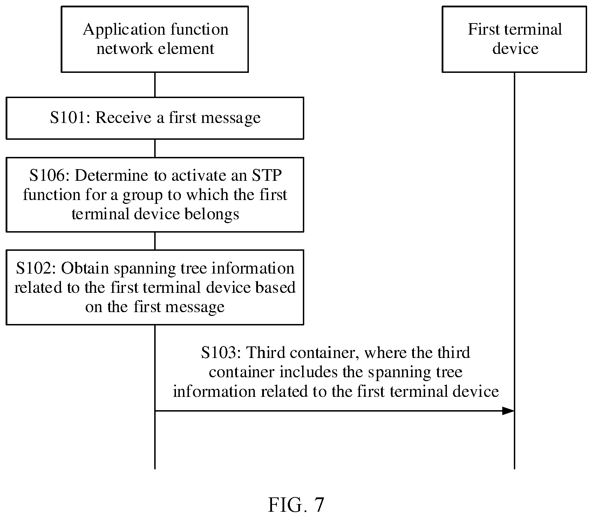

Optionally, based on the embodiment shown in FIG. 5, as shown in FIG. 7, the loop avoidance method further includes step S106 before the step S102.

S106: The application function network element determines to activate the STP function for the group to which the first terminal device belongs.

Optionally, the step S106 may include any one of the following implementations.

Implementation 1-1: When the first message includes third indication information, the application function network element determines to activate the STP function for the group to which the first terminal device belongs. The third indication information indicates to activate the STP function.

Implementation 1-2: The application function network element obtains policy information of an operator or a third party; and when the policy information indicates to activate the STP function, the application function network element determines to activate the STP function for the group to which the first terminal device belongs.

For example, the policy information may be applicable to any group, or the policy information may be associated with the group to which the first terminal device belongs.

In a possible design, the application function network element may obtain, based on the identifier of the group to which the first terminal device belongs, the policy information of the group to which the first terminal device belongs.

Implementation 1-3: When a 5G LAN user plane topology related to the group to which the first terminal device belongs meets a preset condition, the application function network element determines to activate the STP function for the group to which the first terminal device belongs.

For example, that the 5G LAN user plane topology meets the preset condition may include: There are a plurality of ports used to connect to a data network in the 5G LAN user plane topology; and/or there are a plurality of user plane network elements in the 5G LAN user plane topology.

Based on the embodiment shown in FIG. 7, the application function network element may activate the STP function for the group to which the first terminal device belongs in a proper scenario, to avoid a loop on the network because a terminal device in the group to which the first terminal device belongs establishes a new PDU session.

The following specifically describes, with reference to specific examples, the loop avoidance method provided in embodiments of this application.

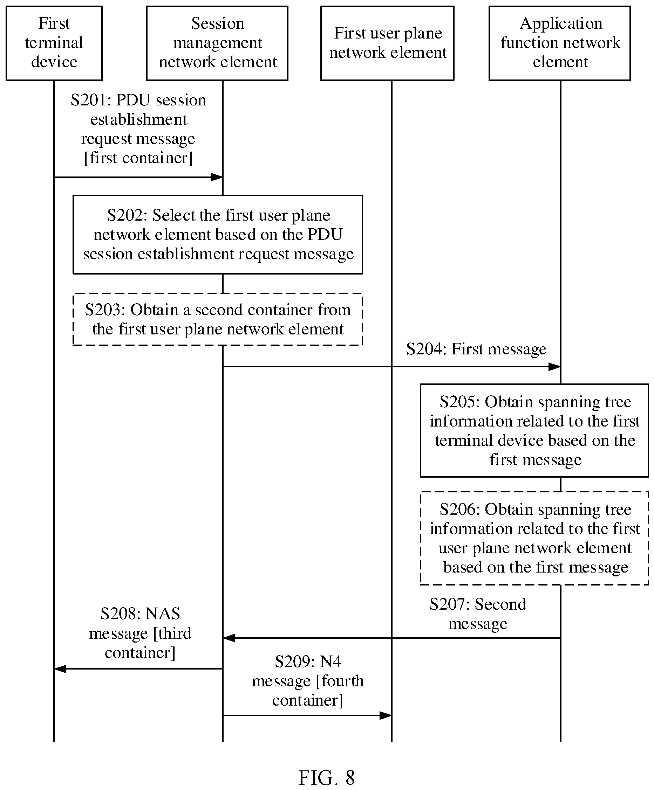

FIG. 8 shows a loop avoidance method according to an embodiment of this application. The method includes the following steps.

S201: A first terminal device sends a PDU session establishment request message to a session management network element. Correspondingly, the session management network element receives the PDU session establishment request message sent by the first terminal device.

The PDU session establishment request message is used to request to establish a PDU session. The PDU session establishment request message includes a first container and an identifier of a group to which the first terminal device belongs.

In this embodiment of this application, for specific descriptions of the first container, refer to the foregoing descriptions. Details are not described herein again.

In this embodiment of this application, the identifier of the group is used to determine a corresponding 5G LAN group. The identifier of the group may be, for example, a data network name (data network name, DNN), a group identifier (Group ID), or a DNN+single network slice selection assistance information (single network slice selection assistance information, S-NSSAI) identifier.

Optionally, the step S201 may be implemented in the following manner: The first terminal device sends the PDU session establishment request message to a mobility management network element. The mobility management network element selects, a session management network element that provides a service for the first terminal device. Then, the mobility management network element sends the PDU session establishment request message to the session management network element.

It should be understood that after receiving the PDU session establishment request message sent by the first terminal device, the session management network element may parse the PDU session establishment request message to obtain the first container.

S202: The session management network element selects a first user plane network element based on the PDU session establishment request message.

The first user plane network element is configured to provide a 5G LAN service for the first terminal device.

In a possible implementation, the session management network element may select the first user plane network element based on factors such as a location of the first terminal device, the identifier of the group to which the first terminal device belongs, a service range of each user plane network element managed by the session management network element, and a service capability of each user plane network element managed by the session management network element.

The session management network element may send an N4 session creation/modification message to the first user plane network element, to configure, on the first user plane network element, an N4 session related to the PDU session of the first terminal device.

S203 (optional): The session management network element obtains a second container.

In a possible implementation, the session management network element receives an N4 message sent by the first user plane network element, where the N4 message includes the second container.

Optionally, the N4 message may further include the identifier of the group to which the first terminal device belongs.

Optionally, the N4 message may further include a bridge priority and/or a bridge MAC address of a LAN bridge on which the first user plane network element is located.

For example, the N4 message may be an N4 report (report) message or an N4 session response message. This is not limited.

In a possible design, when the first terminal device is the first one in the group that is connected to the first user network element, the first user plane network element may actively send, or under indication of the session management network element, the N4 message including the second container to the session management network element.

In another possible design, when the first terminal device is not the first one in the group to connect to the first user plane network element, the first user plane network element may actively send, to the session management network element when bridge information (for example, the bridge priority or the bridge MAC address), port information, or the like changes, the N4 message including the second container.

S204: The session management network element sends a first message to the application function network element. Correspondingly, the application function network element receives the first message from the session management network element.

For related descriptions of the first message, refer to the foregoing descriptions. Details are not described herein again.

In a possible implementation, the session management network element sends the first message to the application function network element by using a policy control function network element. Specifically, a transmission path of the first message may be: the session management network element -> the policy control function network element -> the application function network element.

In another possible implementation, the session management network element sends the first message to the application function network element by using the policy control function network element and a network exposure function network element. Specifically, a transmission path of the first message may be: the session management network element -> the policy control function network element -> the network exposure function network element -> the application function network element.

It should be understood that, in a transmission process of the first message, an intermediate network element (for example, the policy control function network element or the network exposure function network element) that transmits the first message may perform corresponding processing on the first message (for example, modify a name of the first message, or modify content carried in the first message).

Optionally, the step S204 may be specifically implemented as follows: The session management network element may first determine whether to activate the STP function for the group to which the first terminal device belongs. If the session management network element activates the STP function for the group to which the first terminal device belongs, the session management network element sends the first message to the application function management network element.

For example, any one of the following implementations may be used by the session management network element to determine to activate the STP function for the group to which the first terminal device belongs.

Implementation 2-1: The session management network element obtains operator policy information locally; and when the operator policy information indicates to activate the STP function, the session management network element determines to activate the STP function for the group to which the first terminal device belongs. The operator policy information may be applicable to any group; or the operator policy information is associated with the group to which the first terminal device belongs.

Implementation 2-2: The session management network element obtains, from a unified data management network element, subscription information of the group to which the first terminal device belongs. When the subscription information includes indication information indicates to activate the STP function, the session management network element determines to activate the STP function for the group to which the first terminal device belongs.

Optionally, the unified data management network element may receive, by using the network exposure function network element, configuration information that is related to the group to which the first terminal device belongs and that is sent by the application function network element. The configuration information related to the group to which the first terminal device belongs may include indication information indicates to activate the STP function. Therefore, the unified data management network element adds, to the subscription information of the group to which the first terminal device belongs, the indication information indicates to activate the STP function.

Implementation 2-3: The session management network element obtains, from the policy control function network element, a policy and charging control rule associated with the first terminal device. When the policy and charging control rule includes the indication information indicates to activate the STP function, the session management network element determines to activate the STP function for the group to which the first terminal device belongs.

Optionally, the policy control function network element may directly receive the configuration information that is related to the group to which the first terminal device belongs and that is sent by the application function network element. Alternatively, the policy control network element may receive, by using the network exposure function network element, the configuration information that is related to the group to which the first terminal device belongs and that is sent by the application function network element. The configuration information related to the group to which the first terminal device belongs may include the indication information indicates to activate the STP function. Therefore, the policy control function network element may add, to the policy and charging control rule associated with the first terminal device, the indication information indicates to activate the STP function.

Implementation 2-4: The session management network element obtains a 5G LAN user plane topology associated with the group to which the first terminal device belongs. When the 5G LAN user plane topology meets a preset condition, the session management network element determines to activate the STP function for the group to which the first terminal device belongs.

For example, that the 5G LAN user plane topology meets the preset condition may include: There are a plurality of ports used to connect to a data network in the 5G LAN user plane topology; and/or there are a plurality of user plane network elements in the 5G LAN user plane topology.

Optionally, when the session management network element determines to activate the STP function for the group to which the first terminal device belongs, the session management network element may add third indication information to the first message. The third indication information indicates to activate the STP function for the group to which the first terminal device belongs.

Optionally, when the session management network element considers that the first terminal device and the first user plane network element belong to a same LAN bridge, the session management network element may further determine a bridge identifier of the LAN bridge. Further, the first message may include the bridge identifier of the LAN bridge. It should be understood that the bridge identifier of the LAN bridge included in the first message is not necessarily an actually used bridge identifier, but may be a candidate bridge identifier.

Optionally, the session management network element may determine the bridge identifier of the LAN bridge with reference to a bridge MAC address and/or a bridge priority that are/is provided by the first user plane network element.

S205: The application function network element obtains spanning tree information related to the first terminal device based on the first message.

For specific descriptions of the step S205, refer to the step S102. Details are not described herein again.

S206 (optional): The application function network element obtains spanning tree information related to the first user plane network element based on the first message.

For specific descriptions of the step S206, refer to the step S104. Details are not described herein again.

S207: The application function network element sends a second message to the session management network element. Correspondingly, the session management network element receives the second message from the application function network element.

The second message may include a third container. For a specific description of the third container, refer to the foregoing description. Details are not described herein again.

Optionally, when the step S206 is performed, the second message may further include a fourth container. For a specific description of the fourth container, refer to the foregoing description. Details are not described herein again.

Optionally, the second message may further include the identifier of the group to which the first terminal device belongs.

Optionally, the step S207 may be specifically implemented as follows: When the application function network element determines to activate the STP function for the group to which the first terminal device belongs, the application function network element sends the second message to the session management network element.

It should be understood that, for specific implementation details of that the application function network element determines to activate the STP function for the group to which the first terminal device belongs, refer to the step S 106 in FIG. 7. Details are not described herein again.

In a possible implementation, the application function network element sends the second message to the session management network element by using the policy control function network element. Specifically, a transmission path of the second message may be: the application function network element -> the policy control function network element -> the session management network element.

In another possible implementation, the application function network element sends the second message to the session management network element by using the policy control function network element and the network exposure function network element. Specifically, a transmission path of the second message may be: the application function network element -> the network exposure function network element -> the policy control function network element -> the session management network element.

It should be understood that, in a transmission process of the second message, an intermediate network element (for example, the policy control function network element or the network exposure function network element) that transmits the second message may perform corresponding processing on the second message (for example, modify a name of the first message, or modify content carried in the first message).

S208: The session management network element sends an NAS message to the first terminal device based on the second message. Correspondingly, the first terminal device receives the NAS message sent by the session management network element.

The NAS message includes the third container.

For example, the NAS message may be a PDU session establishment complete message. This is not limited.

Optionally, when the second message includes the fourth container, the session management network element may further perform the following step S209.

S209 (optional): The session management network element sends an N4 message to the first user plane network element based on the second message. Correspondingly, the first user plane network element receives the N4 message sent by the session management network element.

The N4 message includes the fourth container.

Based on the embodiment shown in FIG. 8, after receiving the first message including the first container and the second container, the application function network element may obtain spanning tree information of an entire network formed by a 5G LAN and an existing LAN connected to the 5G LAN. Then, the application function network element may send, to the first terminal device, the third container including the spanning tree information related to the first terminal device, and send, to the first user plane network element, the fourth container including the spanning tree information related to the first user plane network element. Therefore, even if the user plane does not need to run an STP election process, the first terminal device and the first user plane network element may configure a port role and a port status of each port of the first terminal device and the first user plane network element, to avoid a loop on the network.

It should be understood that the embodiment shown in FIG. 8 is described from a perspective that the third container and the fourth container are carried in the second message. In an actual application, the third container and the fourth container may also be carried in different messages. This is not limited.

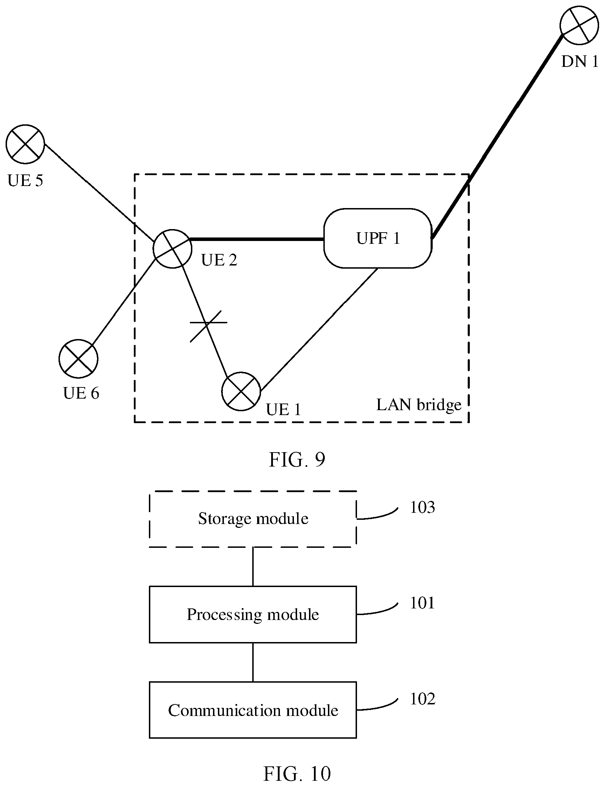

An example is used for description with reference to FIG. 9. It is assumed that UE 2 has been connected to a UPF 1 before UE 1 establishes a PDU session to access a 5G LAN service. Then, when the LTE 1 establishes a PDU session to access the 5G LAN service, the application function network element may consider the UPF 1, the LTE 2, and the LTE 1 as a LAN bridge to perform a simulated STP election process, to obtain spanning tree information related to the UE 1, spanning tree information related to the UE 2, and spanning tree information related to the UPF 1. The application function network element may send the spanning tree information related to the UE 1 to the UE 1, send the spanning tree information related to the UE 2 to the UE 2, and send the spanning tree information related to the UPF 1 to the UPF 1. Therefore, the LTE 2 may set a port used to communicate with the LTE 1 to a blocked state based on the spanning tree information related to the UE 2. The UE 1 may set a port used to communicate with the UE 2 to a blocked state based on the spanning tree information related to the UE 1. In this way, a loop between the UE 1, the UE 2, and the UPF can be avoided.

The foregoing mainly describes the solutions provided in embodiments of this application from the perspective of the methods. It may be understood that, to implement the foregoing functions, the communication apparatus (for example, the application function network element, the first terminal device, or the first user plane network element) includes corresponding hardware structures and/or software modules for performing the functions. With reference to units and algorithm steps of the examples described in embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, the communication apparatus may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in this embodiment of this application, division into the units is an example, and is merely a logical function division. In actual implementation, another division manner may be used.

FIG. 10 shows a communication apparatus according to an embodiment of this application. The communication apparatus includes a processing module 101 and a communication module 102.

In a possible example, the communication apparatus is an application function network element. The processing module 101 is configured to support the application function network element in performing S102 in FIG. 5, the step S104 in FIG. 6, the step S106 in FIG. 7, and/or another processing operation that needs to be performed by the application function network element in embodiments of this application. The communication module 102 is configured to support the application function network element in performing the steps 101 and S103 in FIG. 5, the step S105 in FIG. 6, the step S207 in FIG. 8, and/or another communication operation that needs to be performed by the application function network element in embodiments of this application.

In another possible example, the communication apparatus is a first terminal device. The processing module 101 is configured to support the first terminal device in performing a corresponding processing operation (for example, generating a first container, and performing configuration based on spanning tree information related to the first terminal device). The communication module 102 is configured to support the first terminal device in performing the step S103 in FIG. 5, the step S208 in FIG. 8, and/or another communication operation that needs to be performed by the first terminal device in embodiments of this application.

In another possible example, the communication apparatus is a first user plane network element. The processing module 101 is configured to support the first user plane network element in performing a corresponding processing operation (for example, a second container performs configuration based on spanning tree information related to the first user plane network element). The communication module 102 is configured to support the first user plane network element in performing the step S109 in FIG. 6, the step S208 in FIG. 8, and/or another communication operation that needs to be performed by the first user plane network element in embodiments of this application.

Optionally, the communication apparatus may further include a storage module 103, configured to store program code and data of the communication apparatus. The data may include but is not limited to original data, intermediate data, or the like.

The processing module 101 may be a processor or a controller, for example, may be a CPU, a general purpose processor, an application-specific integrated circuit (application specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The communication module 102 may be a communication interface, a transceiver, a transceiver circuit, or the like. The communication interface is a general term. During specific implementation, the communication interface may include a plurality of interfaces, for example, may include an interface between a base station and a terminal and/or another interface.

The storage module 103 may be a memory.

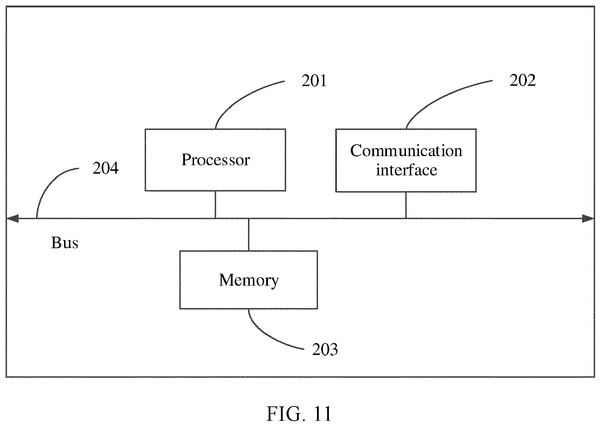

When the processing module 101 is a processor, the communication module 102 is a communication interface, and the storage module 103 is a memory, the communication apparatus in this embodiment of this application may be shown in FIG. 11.

Refer to FIG. 11. The communication apparatus includes a processor 201, a communication interface 202, and a memory 203. Optionally, the communication apparatus may further include a bus 204. The communication interface 202, the processor 201, and the memory 203 may be connected to each other through the bus 204. The bus 204 may be a peripheral component interconnect standard (peripheral component interconnect, PCI) bus, an extended industry standard architecture (extended industry standard architecture, EISA) bus, or the like. The bus 204 may be classified into an address bus, a data bus, a control bus, and the like. For ease of representation, only one bold line is used to represent the bus in FIG. 11, but this does not mean that there is only one bus or only one type of bus.

Optionally, an embodiment of this application further provides a computer program product carrying computer instructions. When the computer instructions are run on a computer, the computer is enabled to perform the method described in the foregoing embodiments.

Optionally, an embodiment of this application further provides a computer-readable storage medium. The computer-readable storage medium stores computer instructions. When the computer instructions are run on a computer, the computer is enabled to perform the method described in the foregoing embodiments.

Optionally, an embodiment of this application further provides a chip, including a processing circuit and a transceiver pin. The processing circuit and the transceiver pin are configured to implement the method described in the foregoing embodiments. The processing circuit is configured to perform a processing action in a corresponding method, and the transceiver pin is configured to perform a receiving/transmitting action in the corresponding method.

A person of ordinary skill in the art may understand that all or some of the foregoing embodiments may be implemented by software, hardware, firmware, or any combination thereof. When the software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state disk (Solid State Disk, SSD)), or the like.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of devices. Some or all of the units may be selected based on actual requirements to achieve the objectives of the solutions of embodiments.

In addition, function units in embodiments of this application may be integrated into one processing unit, or each of the function units may exist alone physically, or two or more units are integrated into one unit. The integrated unit may be implemented as hardware, or may be implemented as a combination of hardware and a software functional unit.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions in this application essentially or the part contributing to the conventional technology may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A loop avoidance method, wherein the method comprises:
receiving, by an application function network element, a first message, wherein the first message comprises a first container, and the first container indicates port information of a first terminal device;
obtaining, by the application function network element based on the first message, spanning tree information related to the first terminal device; and
sending, by the application function network element, a third container to the first terminal device, wherein the third container comprises the spanning tree information related to the first terminal device.

2. The method according to claim 1, wherein the spanning tree information related to the first terminal device indicates a port role and a port status of a port of the first terminal device.

3. The method according to claim 2, wherein the spanning tree information related to the first terminal device further comprises a bridge identifier of a local area network bridge LAN bridge on which the first terminal device is located.

4. The method according to claim 3, wherein the spanning tree information related to the first terminal device further comprises a root bridge identifier.

5. The method according to claim 3 or 4, wherein the LAN bridge comprises the first terminal device and a first user plane network element connected to the first terminal device.

6. The method according to claim 5, wherein the LAN bridge further comprises a second terminal device connected to the first user plane network element.

7. The method according to claim 6, wherein the second terminal device and the first terminal device belong to a same group.

8. The method according to any one of claims 1 to 7, wherein the third container further comprises first indication information, and the first indication information indicates the first terminal device to activate an STP function.

9. The method according to any one of claims 1 to 8, wherein the first container further comprises first STP capability information and/or first STP version information, the first STP capability information indicates whether the first terminal device supports the STP function, and the first STP version information indicates an STP version supported by the first terminal device.

10. The method according to any one of claims 1 to 9, wherein the first message further comprises a second container, and the second container indicates port information of the first user plane network element connected to the first terminal device.

11. The method according to claim 10, wherein the second container further comprises second STP capability information and/or second STP version information, the second STP capability information indicates whether the first user plane network element supports the STP function, and the second STP version information indicates an STP version supported by the first user plane network element.

12. The method according to claim 10 or 11, wherein the method further comprises:
obtaining, by the application function network element based on the first message, spanning tree information related to the first user plane network element; and
sending, by the application function network element, a fourth container to the first user plane network element, wherein the fourth container comprises the spanning tree information related to the first user plane network element.

13. The method according to claim 12, wherein the spanning tree information related to the first user plane network element indicates a port role and a port status of a port of the first user plane network element.

14. The method according to claim 13, wherein the spanning tree information related to the first user plane network element further comprises a bridge identifier of a LAN bridge on which the first user plane network element is located.

15. The method according to claim 13 or 14, wherein the spanning tree information related to the first user plane network element further comprises a root bridge identifier.

16. The method according to any one of claims 12 to 15, wherein the fourth container further comprises second indication information, and the second indication information indicates the first user plane network element to activate an STP function.

17. The method according to any one of claims 1 to 16, wherein the first message further comprises an identifier of the group to which the first terminal device belongs.

18. The method according to claim 17, wherein before the obtaining, by the application function network element based on the first message, spanning tree information related to the first terminal device, the method further comprises:
obtaining, by the application function network element, policy information associated with the group to which the first terminal device belongs; and
when the policy information is used to support activation of the STP function, determining, by the application function network element, to activate the STP function for the group to which the first terminal device belongs.

19. The method according to claim 17, wherein before the obtaining, by the application function network element based on the first message, spanning tree information related to the first terminal device, the method further comprises:
obtaining, by the application function network element, a 5G LAN user plane topology associated with the group to which the first terminal device belongs; and
when the 5G LAN user plane topology meets a preset condition, determining, by the application function network element, to activate the STP function for the group to which the first terminal device belongs.

20. The method according to claim 19, wherein that the 5G LAN user plane topology meets the preset condition comprises one or more of the following:
there are a plurality of ports used to connect to a data network in the 5G LAN user plane topology; or
there are a plurality of user plane network elements in the 5G LAN user plane topology.

21. A loop avoidance method, wherein the method comprises:
sending, by a first terminal device, a first container to an application function network element, wherein the first container indicates port information of the first terminal device; and
receiving, by the first terminal device, a third container sent by the application function network element, wherein the third container comprises spanning tree information related to the first terminal device.

22. The method according to claim 21, wherein the spanning tree information related to the first terminal device indicates a port role and a port status of a port of the first terminal device.

23. The method according to claim 22, wherein the spanning tree information related to the first terminal device further comprises a bridge identifier of a LAN bridge on which the first terminal device is located.

24. The method according to claim 23, wherein the spanning tree information related to the first terminal device further comprises a root bridge identifier.

25. The method according to claim 23 or 24, wherein the LAN bridge comprises the first terminal device and a first user plane network element connected to the first terminal device.

26. The method according to claim 25, wherein the LAN bridge further comprises a second terminal device connected to the first user plane network element.

27. The method according to claim 26, wherein the second terminal device and the first terminal device belong to a same group.

28. The method according to any one of claims 21 to 27, wherein the third container further comprises first indication information, and the first indication information indicates the first terminal device to activate an STP function.

29. The method according to any one of claims 21 to 28, wherein the first container further comprises first STP capability information and/or first STP version information, the first STP capability information indicates whether the first terminal device supports the STP function, and the first STP version information indicates an STP version supported by the first terminal device.

30. A loop avoidance method, wherein the method comprises:
sending, by a first user plane network element, a second container to an application function network element, wherein the second container indicates port information of the first user plane network element; and
receiving, by the first user plane network element, a fourth container sent by the application function network element, wherein the fourth container comprises spanning tree information related to the first user plane network element.

31. The method according to claim 30, wherein the spanning tree information related to the first user plane network element indicates a port role and a port status of a port of the first user plane network element.

32. The method according to claim 31, wherein the spanning tree information related to the first user plane network element further comprises a bridge identifier of a LAN bridge on which the first user plane network element is located.

33. The method according to claim 32, wherein the spanning tree information related to the first user plane network element further comprises a root bridge identifier.

34. The method according to claim 32 or 33, wherein the LAN bridge comprises the first user plane network element and a first terminal device connected to the first user plane network element.

35. The method according to any one of claims 30 to 34, wherein the fourth container further comprises second indication information, and the second indication information indicates the first user plane network element to activate an STP function.

36. The method according to any one of claims 30 to 35, wherein the second container further comprises second STP capability information and/or second STP version information, the second STP capability information indicates whether the first user plane network element supports the STP function, and the second STP version information indicates an STP version supported by the first user plane network element.

37. A communication apparatus, wherein the communication apparatus comprises modules configured to perform the steps in the method according to any one of claims 1 to 36.

38. A computer-readable storage medium, wherein the computer-readable storage medium stores computer instructions, and when the computer instructions are run on a computer, the computer is enabled to perform the method according to any one of claims 1 to 36.

39. A computer program product, wherein the computer program product comprises instructions, and when the instructions are run on a computer, the computer is enabled to perform the method according to any one of claims 1 to 36.

40. A chip, wherein the chip comprises a processing circuit and a transceiver pin, the processing circuit is configured to perform a processing operation in the method according to any one of claims 1 to 36, and the transceiver pin is configured to perform a communication operation in the method according to any one of claims 1 to 36.
